# FASCICULE DE BREVET EUROPEEN

(11) **EP 3 840 908 B1**
(45) Date de publication et mention de la délivrance du brevet: **18.02.2026**
(21) Numéro de dépôt: 19753108.0
(22) Date de dépôt: 19.08.2019
(51) Int. Cl.: B23K 26/03, G01N 21/94, B23K 26/70, G01N 21/88, G01N 21/958

(54) **DISPOSITIF ET METHODE DE CONTROLE DE VERRE DE PROTECTION DE SOUDEUSE LASER**
VORRICHTUNG UND VERFAHREN ZUM PRÜFEN VON LASERSCHWEISSSCHUTZGLAS
DEVICE AND METHOD FOR INSPECTING LASER WELDING PROTECTIVE GLASS

(30) Priorité: 22.08.2018 FR 1857582
(43) Date de publication de la demande: 30.06.2021
(73) Titulaire: Autoliv Development AB, 447 83 Vårgårda (SE)
(72) Inventeur: COUEDIC, Gilbert, 29510 Briec (FR)
(74) Mandataire: Poindron, Cyrille
(86) Numéro de dépôt international: PCT/EP2019/072095
(87) Numéro de publication internationale: WO 2020/038863

(56) Documents cités:
- EP-A1- 2 687 317
- DE-A1- 10 113 518
- DE-A1- 102007 003 023
- DE-A1- 102011 007 176
- DE-U1- 20 314 918
- DE-U1- 29 903 385
- US-A1- 2013 258 321
- US-A1- 2014 224 780

## Description

La présente invention concerne de manière générale un dispositif et une méthode de contrôle d'un composant optique d'une chaîne de transmission optique d'un faisceau laser, et en particulier l'invention concerne un dispositif et une méthode de contrôle d'un verre de protection d'une soudeuse laser.

Les dispositifs de soudage laser comprennent typiquement une source laser pour émettre un faisceau laser, et une ou plusieurs lentilles formant un chemin optique qui permet de diriger et/ou focaliser le faisceau laser sur une zone de soudage, afin de souder des composants, par exemple métalliques. L'opération de soudage génère typiquement de la fumée et/ou des projections de matière en fusion, si bien qu'il est nécessaire de prévoir un verre de protection entre la zone de soudage et la dernière lentille du chemin optique, afin d'éviter des dégradations de la lentille par les fumées et/ou matière en fusion (autrement appelés gratons). Cependant, le verre de protection présentant ou pas un traitement de surface tel qu'un traitement anti-reflets, est donc directement exposé à ces fumées et projections, et ce verre de protection peut être rendu opaque par les dépôts de fumées ou de projections de matière en fusion, si bien que la qualité de la soudure peut être affectée si le verre de protection ne transmet pas assez bien le faisceau laser.

Il est de plus compliqué de tester la transparence d'un verre de protection de soudeuse laser, et les inventeurs de la présente invention ont été confrontés à la difficulté de pouvoir discriminer de manière fiable un verre de protection trop opaque après un certain temps d'utilisation, qu'il ait été nettoyé ou pas, pour pouvoir être (encore) utilisé, d'un autre verre de protection un peu opaque, mais qui peut encore être utilisé sans affecter la qualité de soudure.

Le document US 2013/258321 A1 divulgue un dispositif de contrôle de verre de protection de soudeuse laser à l'aide d'une source de test et par des mesures de réflexion et de transmission.

Le document DE 101 13 518 A1 divulgue un dispositif de contrôle de verre de protection de soudeuse laser par une mesure de réflexion.

Un but de la présente invention est de répondre aux inconvénients de l'art antérieur mentionnés ci-dessus et en particulier, tout d'abord, de proposer un dispositif et une méthode de contrôle d'un verre de protection d'un dispositif de soudage laser, qui permette de vérifier de manière fiable si le verre de protection doit être changé, ou s'il peut continuer à être utilisé sans créer de défauts de soudage.

Pour cela un premier aspect de l'invention concerne un dispositif de contrôle de verre de protection de soudeuse laser, comme défini dans la revendication 1.

Autrement dit, l'invention concerne un dispositif de contrôle de verre de protection de soudeuse laser, la soudeuse laser comprenant une source laser présentant une longueur d'onde laser,
le dispositif de contrôle comprenant :
- une source de lumière agencée pour émettre une lumière de test,
- des moyens de réception agencés pour recevoir au moins une partie de la lumière de test et pour quantifier au moins une quantité de lumière reçue,
- des moyens de maintien du verre de protection agencés pour positionner le verre de protection entre la source de lumière et les moyens de réception, caractérisé en ce que :
   - la partie de la lumière de test reçue par les moyens de réception présente une longueur d'onde à ±20% de la longueur d'onde laser. Ainsi, la lumière d'exposition est représentative de l'utilisation dans la soudeuse laser, et la mesure de la capacité à transmettre de la lumière se fait dans un domaine de longueurs d'onde représentatif de l'utilisation réelle.

Un exemple, qui n'est pas couvert par l'invention revendiquée, concerne un dispositif de contrôle optique agencé pour tester un composant optique d'une chaine de transmission optique d'un faisceau laser de soudage présentant une longueur d'onde laser, comprenant :
- une source de lumière agencée pour émettre une lumière de test,
- des moyens de réception agencés pour recevoir au moins une partie de la lumière de test et pour quantifier au moins une quantité de lumière reçue,
- des moyens de maintien du composant optique agencés pour positionner le composant optique entre la source de lumière et les moyens de réception, caractérisé en ce que :
   - la partie de la lumière de test reçue par les moyens de réception présente une longueur d'onde à ±20% de la longueur d'onde laser. Ainsi, la lumière d'exposition est représentative de l'utilisation dans la soudeuse laser, et la mesure de la capacité à transmettre de la lumière se fait dans un domaine de longueurs d'onde représentatif de l'utilisation réelle. Dans le reste de la présente demande, le composant optique est un verre de protection de soudeuse laser, mais le composant optique peut être une lentille, un miroir ou tout organe de la soudeuse qui transmet ou réfléchit de la lumière.

D'une manière générale, le dispositif de contrôle est un dispositif distinct de l'équipement de soudage. Ainsi, il est possible de tester des composants optiques sans immobiliser les équipements de soudage de production. En particulier, la source de lumière du dispositif de contrôle n'est pas celle de la soudeuse laser, les moyens de maintien ne sont pas une pièce de la soudeuse laser.

De plus, si le composant optique n'est pas un miroir, alors il est, selon l'invention revendiquée, spatialement agencé entre la source de lumière et les moyens de réception. En conséquence, la lumière de test traverse entièrement le composant optique à vérifier. S'il y a par exemple des impuretés complètement opaques sur la surface du composant optique, on mesurera une ombre sur les moyens de réception, et non une réflexion. Cela garantit un meilleur contraste et une meilleure détection finale.

En particulier, si le composant optique est transparent et comprend un traitement anti reflet sur un ou ses deux faces, alors le traitement anti reflet sera complètement traversé par la lumière ensuite reçue par les moyens de réception. La demanderesse s'est aperçu que l'intégrité des traitements anti reflet est un paramètre important pour garantir une soudure de bonne qualité.

En particulier, la source de lumière est positionnée par rapport au composant optique comme la source de lumière de soudage de la soudeuse laser, et les moyens de réception sont positionnés par rapport au composant optique comme la pièce à souder. Ainsi, le test porte sur les parties du composant optique traversées par la lumière de soudage : les parties de travail.

Selon un mode de réalisation typique et avantageux, la source de lumière et les moyens de réception sont situés sur un axe de symétrie ou un axe central du composant optique. Cette mise en oeuvre simplifie les calculs, et s'affranchit des réflexions. En effet, mesurer un encrassement par réflexion peut facilement conduire à des erreurs d'interprétation car notamment la réflectivité des impuretés ou fumées n'est pas répétable (en fonction de leur composition, qui dépend de la propreté des pièces, des résidus vaporisés, en fonction de la forme des impureté, ...).

La lumière de test reçue par les moyens de réception présente une longueur d'onde comprise entre 855nm et 1276nm, de préférence entre 955 nm et 1170 nm, et encore plus préférentiellement entre 1010 nm et 1110 nm, et très préférentiellement entre 1040 nm et 1080 nm, ce qui représente une fable partie du spectre infra rouge. En effet, dans le domaine optique et photonique, le spectre infra rouge est typiquement compris dans une plage de longueur d'onde allant de 700 nm à 5 000 000 nm. En conséquence, la plage allant de 855nm à 1276nm représente environ 0.008% de la plage totale du rayonnement infra rouge.

Avantageusement, le dispositif de contrôle comprend au moins un filtre optique agencé entre la source de lumière et les moyens de réception, et agencé pour laisser passer vers les moyens de réception uniquement ou exclusivement la lumière de test dont la longueur d'onde est comprise entre 855nm et 1276nm, de préférence entre 955 nm et 1170 nm, et encore plus préférentiellement entre 1010 nm et 1110 nm, et très préférentiellement entre 1040 nm et 1080 nm. Idéalement, le filtre optique est prévu pour présenter une bande passante de 12nm ± 2 nm et centrée sur une longueur d'onde de la plage préférée, c'est-à-dire que la longueur d'onde des ondes lumineuses atteignant les moyens de réception est comprise par exemple entre 1058 nm et 1070 nm si la bande passante est centrée sur 1064 nm. En d'autres termes, la bande passante du filtre optique a une largeur de 1,2% de la longueur d'onde du faisceau laser de la source laser de la soudeuse.

Avantageusement, le filtre optique est agencé entre le verre de protection et les moyens de réception.

Alternativement ou en addition, le, ou un autre, filtre optique est agencé entre la source de lumière et le verre de protection. Cela permet de n'exposer le verre de protection qu'à la lumière représentative de ses conditions de travail.

Avantageusement ou alternativement, la lumière de test émise par la source de lumière présente une longueur d'onde comprise entre 855nm et 1276nm, de préférence entre 955 nm et 1170 nm, et encore plus préférentiellement entre 1010 nm et 1110 nm, et très préférentiellement entre 1040 nm et 1080 nm.

Avantageusement, la source de lumière émet de la lumière dont la longueur d'onde est uniquement ou exclusivement comprise entre 855nm et 1276nm, de préférence entre 955 nm et 1170 nm, et encore plus préférentiellement entre 1010 nm et 1110 nm, et très préférentiellement entre 1040 nm et 1080 nm.

Avantageusement, la lumière de test présente un spectre lumineux dont 80% au moins est compris dans une gamme de valeurs de ±20% de la longueur d'onde laser.

Avantageusement, la lumière de test présente un spectre lumineux dont 80% au moins présente une longueur d'onde comprise entre 855nm et 1276nm, de préférence entre 955 nm et 1170 nm, et encore plus préférentiellement entre 1010 nm et 1110 nm, et très préférentiellement entre 1040 nm et 1080 nm.

Autrement dit, 80% des ondes électromagnétiques émises par la source de lumière ont une longueur d'onde comprise dans une gamme de valeurs de ±20% de la longueur d'onde laser, et/ou comprise entre 855nm et 1276nm, de préférence entre 955 nm et 1170 nm, et encore plus préférentiellement entre 1010 nm et 1110 nm, et très préférentiellement entre 1040 nm et 1080 nm.

Avantageusement, la source de lumière comprend une diode électroluminescente. Cela permet de construire un dispositif de contrôle optique qui ne requiert pas de conditions d'utilisations particulières tel qu'il peut y en avoir pour l'utilisation de dispositifs lasers.

Avantageusement, le verre de protection est séparé de la source de lumière par une distance comprise dans une plage de valeurs allant de 50 mm à 120 mm, et plus préférentiellement de 70 mm à 100 mm.

Avantageusement, les moyens de réception comprennent un capteur avec une surface de mesure, et le verre de protection est séparé des moyens de réception par une distance définie de sorte à permettre une mise au point des moyens de réception sur le verre de protection, et de sorte à qu'une image du verre de protection sur les moyens de réception occupe au moins 80% de la surface de mesure, et préférentiellement au moins 90% de la surface de mesure. Cela permet de faire une mesure globale.

Avantageusement, le capteur est un capteur du type CMOS, ou Complementary Metal Oxide Semiconductor, qui est composé de photodiodes, à l'instar d'un CCD, où chaque photosite possède son propre convertisseur charge/tension et amplificateur (dans le cas d'un capteur APS). Un tel capteur est bon marché et permet toutefois de réaliser de bonnes mesures, même pour les longueurs d'ondes considérées.

Avantageusement, les moyens de réception comprennent un unique capteur et/ou une unique source de lumière. Le dispositif de contrôle est simple et économique à construire, et garantit toutefois un contrôle efficace.

Avantageusement, le dispositif comprend un boîtier agencé pour faire écran aux rayonnements lumineux autres que ceux de la source de lumière. En d'autres termes, un capot extérieur empêche la lumière ambiante de perturber la mesure.

Un second aspect de l'invention concerne un procédé de contrôle d'un verre de protection de soudeuse laser, comme défini dans la revendication 8.

Avantageusement, ladite au moins une caractéristique de transmission est un taux de transmission, et/ou une transparence, et/ou une surface d'un point opaque du verre de protection, et/ou une surface totale de points opaques du le verre de protection. Par exemple, les points opaques peuvent être des gratons (projections solidifiées en surface du verre de protection), ou des inclusions dans la masse du verre de protection.

Avantageusement, le procédé de contrôle comprend une étape préliminaire de mesure de référence, consistant à émettre la lumière de test sans le verre de protection sur le chemin optique et à mesurer la quantité de la lumière de test reçue par les moyens de réception, de sorte à établir un seuil de référence de quantité de la lumière de test reçue. Il s'agit typiquement de faire une mesure avant et après la mise en place du verre de protection, pour limiter les erreurs et dérives du matériel.

Avantageusement, ladite mesure de référence comprend une étape consistant à maximiser un gain d'un capteur des moyens de réception. Cela permet de se placer dans un domaine de mesure avec des valeurs mesurables aisément.

Avantageusement, le capteur comprenant une pluralité de surfaces photosensibles agencées pour émettre un signal représentatif d'une quantité de lumière reçue, et ladite l'étape consistant à maximiser le gain comprend une étape consistant à faire varier un temps d'exposition et/ou une intensité d'émission de la source de lumière, de sorte à ce que le signal émis par chaque surface photosensible soit au moins 80% d'un signal dit de pleine échelle de chaque surface photosensible, de préférence 89% du signal de pleine échelle, et plus préférentiellement 93% du signal de pleine échelle.

Avantageusement, le signal émis par chaque surface photosensible est strictement inférieur à 100% du signal de pleine échelle.

Avantageusement, ledit temps d'exposition et/ou ladite intensité d'émission est maintenu(e) constant(e) pour les mesures ultérieures avec le verre de protection placé sur le chemin optique.

Avantageusement, ladite la transparence est calculée en effectuant une moyenne de la différence du signal émis par chaque surface photosensible entre la mesure de référence et le mesure de test.

Avantageusement, le procédé de contrôle comprend une étape consistant à mettre en fonctionnement la source de lumière, et dans lequel aucune mesure n'est effectuée avant un temps prédéterminé, tel que trente minutes ou mieux une heure, et/ou avant qu'une différence de mesure entre deux mesures effectuées à intervalle de test constant ne soit inférieure à une différence prédéterminée, telle que 0.5% ou encore mieux 0.1%.

Avantageusement, le procédé de contrôle comprend une étape consistant à émettre et/ou filtrer la lumière de test pour ne transmettre aux moyens de réception que de la lumière qui présente une longueur d'onde comprise entre 855nm et 1276nm, de préférence entre 955 nm et 1170 nm, et encore plus préférentiellement entre 1010 nm et 1110 nm, et très préférentiellement entre 1040 nm et 1080 nm.

Avantageusement, le procédé de contrôle comprend une étape consistant à émettre et/ou filtrer la lumière de test pour n'exposer le verre de protection qu'avec de la lumière qui présente une longueur d'onde comprise entre 855nm et 1276nm, de préférence entre 955 nm et 1170 nm, et encore plus préférentiellement entre 1010 nm et 1110 nm, et très préférentiellement entre 1040 nm et 1080 nm.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente une vue simplifiée d'une installation de soudage laser ;
- la figure 2 représente une vue schématique d'un dispositif de contrôle selon l'invention.

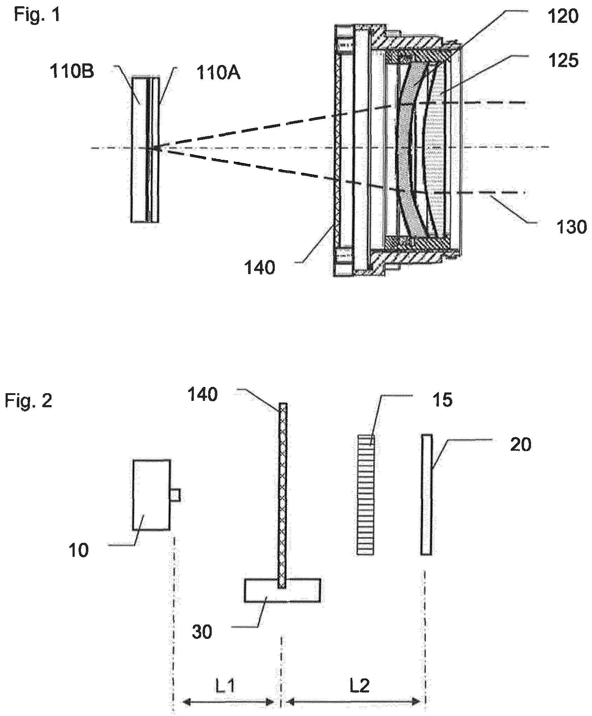

La figure 1 représente deux pièces à souder 110A et 110B. A cet effet, une soudeuse laser qui comprend une source laser, par exemple une source laser de type Nd:YAG, génère un faisceau laser 130, qui est convergé vers la zone de soudage des pièces 110A et 110B par des lentilles 120 et 125, et en particulier une lentille 120 qui est la dernière sur le chemin optique du faisceau laser 130 avant les pièces à souder 110A et 110B.

Le laser Nd:YAG (acronyme du nom anglais : neodymium-doped yttrium aluminium garnet) émet typiquement une lumière de longueur d'onde d'environ 1060 nm, et plus précisément 1064nm.

Afin de protéger correctement la lentille 120 des fumées et projections de matière générées lors du soudage laser, il est typiquement prévu un verre de protection 140 entre la dernière lentille 120 et les pièces à souder. Ce verre de protection se couvre alors progressivement de dépôts et/ou est dégradé (par la fumée, les projections de métal chaud et/ou en fusion) et devient progressivement opaque, ce qui altère ses propriétés de transmission du faisceau laser 130, et affecte alors la qualité de la soudure.

La figure 2 représente un dispositif de contrôle du verre de protection 140, afin de vérifier si ce dernier est apte à transmettre correctement le faisceau laser 130, avant sa première utilisation, ou après un certain temps d'utilisation.

En particulier, le verre de protection 140 est placé entre une source de lumière 10 et des moyens de réception 20, grâce à des moyens de maintien en position 30.

Afin de correctement quantifier l'aptitude de transmission du verre de protection 140, l'invention propose d'utiliser un filtre optique 15 et/ou une source de lumière 10 pour effectuer des mesures de contrôle avec des ondes lumineuses ayant des caractéristiques proches de celles du faisceau laser 130.

Selon une mise en œuvre avantageuse, un filtre optique 15 fonctionnant comme filtre passe bande, passe haut ou passe bas (en fonction des caractéristiques du spectre lumineux de la source lumineuse 10) est utilisé. La lumière qui est transmise par le filtre optique présente une longueur d'onde comprise entre 855nm et 1276nm, de préférence entre 955 nm et 1170 nm, et encore plus préférentiellement entre 1010 nm et 1110 nm, et très préférentiellement entre 1040 nm et 1080 nm. Le reste du spectre lumineux de la source de lumière 10 est soit absorbé, ou réfléchi, mais il n'est pas transmis en aval du filtre optique 15.

On peut prévoir de placer le filtre optique 15 comme sur la figure 2, c'est-à-dire entre le verre de protection 140 et les moyens de réception 20. En particulier, on peut prévoir d'intégrer le filtre optique sur ou dans le capteur qui forme typiquement les moyens de réception. Cependant, on peut aussi prévoir (en alternative ou en addition) un filtre optique entre la source de lumière 10 et le verre de protection 140, ce qui a pour avantage de n'exposer le verre de protection 140 qu'à de la lumière ayant des caractéristiques similaires à la lumière de travail (la lumière du faisceau laser 130).

Dans le détail, on peut prévoir un filtre optique 15 passe-bande avec les caractéristiques suivantes :

| | | | |
|---|---|---|---|
| Longueur d'Onde Centrale CWL (nm): | 1050.00 | Tolérance de la Longueur d'Onde Centrale (nm): | ±2 |
| Largeur à Mi-Hauteur FWHM (nm): | 12.00 | Tolérance de la Largeur Max à Mi-Hauteur FWHM (nm): | ±2 |
| Densité Optique OD: | ≥4.0 | Ouverture Utile CA (mm): | 21.0 |
| Gamme de Blocage (nm): | 200 - Far IR | Diamètre (mm): | 25.00 |
| Qualité de Surface: | 80-50 | Transmission Min. (%): | >70 |
| Épaisseur (mm): | 7.50 | | |

On notera que le filtre ci-dessus présente une bande passante centrée sur 1050 nm, ce qui est très proche de la longueur d'onde d'un laser YAG (environ 1060 nm), et donne des résultats tout à fait acceptables : il est possible de discriminer un verre de protection non conforme (qui rendrait une soudure laser non conforme en termes de profondeur de pénétration, largeur fusionnée...), d'un verre de protection conforme.

En alternative ou en supplément du filtre 15 décrit ci-dessus, il peut être prévu d'utiliser une source de lumière qui génère de la lumière ayant une longueur d'onde similaire à celle du faisceau laser, c'est-à-dire égale à la longueur d'onde du faisceau laser à ±20% par exemple.

Selon une mise en oeuvre avantageuse, si le faisceau laser est du type YAG, alors la source de lumière 10 émet une lumière dont la longueur d'onde est comprise entre 855nm et 1276nm, de préférence entre 955 nm et 1170 nm, et encore plus préférentiellement entre 1010 nm et 1110 nm, et très préférentiellement entre 1040 nm et 1080 nm.

Très avantageusement la source de lumière 10 comprend une ou plusieurs diodes électroluminescentes (DELs ou LEDs), ce qui permet de générer aisément de la lumière, sans pour autant générer de chaleur (qui pourrait faire varier les caractéristiques de mesure), et la lumière émise peut présenter une longueur d'onde spécifique. On peut envisager par exemple d'utiliser des diodes électroluminescentes laser, pour générer une lumière cohérente.

Les moyens de réception 20 comprennent typiquement un capteur de lumière, par exemple un capteur CMOS, qui présente une surface de mesure suffisante pour pouvoir prendre une image d'une bonne partie du verre de protection 140. En particulier, la surface mesurée du verre de protection 140 est d'au moins 55 mm² par exemple, ce qui permet, en une mesure (ou une photo) de quantifier une surface notable du verre de protection 140. Un capteur CMOS présente l'avantage d'être peu onéreux. Ce type de capteur n'est pas spécifiquement défini pour faire de l'acquisition dans les infrarouges mais ses faibles capacités dans cette plage de fréquence sont cependant suffisantes pour le besoin spécifique du dispositif décrit.

Selon une mise en œuvre avantageuse, le verre de protection 140 est séparé de la source de lumière par une distance L1 comprise dans une plage de valeurs allant de 50 mm à 120 mm, et plus préférentiellement de 70 mm à 100 mm.

Selon une mise en œuvre avantageuse, le verre de protection 140 est séparé des moyens de réception 20 par une distance L2 définie de sorte à permettre une mise au point sur le verre de protection 140, et de sorte à ce qu'une image du verre de protection 140 sur les moyens de réception 20 occupe au moins 80% de la surface de mesure du capteur de lumière, et préférentiellement au moins 90% de la surface de mesure du capteur de lumière. En d'autres termes, la photo prise par le capteur de lumière doit à 80% être une image du verre de protection.

Il est également prévu d'optimiser l'utilisation des moyens de réception 20 et du capteur de lumière utilisé. Il a été observé qu'il est avantageux d'utiliser les moyens de réception de sorte à ce qu'ils génèrent un signal de mesure le plus grand possible.

A cet effet, il est prévu, avant de tester un verre de protection, de réaliser une étape consistant à régler la source de lumière 10 pour générer un signal des moyens de réception 20 le plus grand possible, sans pour autant être saturé.

En pratique, le verre de protection n'est pas placé sur les moyens de maintien 30, et la source de lumière 10 est directement en regard avec les moyens de réception 20. La source de lumière 10 est mise en fonctionnement. Il peut être tout d'abord prévu de laisser le système s'équilibrer (montée en température, stabilisation,...), et de ne faire une première mesure que 30 mins à 1 heure après mise en marche.

Ensuite, toujours sans le verre de protection 140, une première mesure est effectuée, et le signal obtenu du capteur de lumière est comparé avec son signal maximal. Si le signal obtenu est faible, par exemple inférieur à 80%, ou encore inférieur à 89% du signal pleine échelle, alors l'intensité lumineuse de la source de lumière 10 est augmentée, jusqu'à ce que le signal obtenu des moyens de réception 20 soit supérieur à la limite minimale, mais le signal doit rester strictement inférieur à la pleine échelle.

Par exemple, si le capteur de lumière comprend des surfaces photosensibles (ou pixels) dont le signal peut varier entre 0 et 255 (on peut prévoir par exemple trois types de surfaces photosensibles, chacune sur une de trois couleurs rouge, vert et bleu), on peut prévoir de régler l'intensité de la source lumineuse 10 de sorte à ce que chacune des surfaces photosensibles du capteur de lumière génère un signal compris entre 225 et 255.

Cette phase de calibration finie, il est alors possible de passer à la caractérisation des caractéristiques de transmission du verre de protection 140. Une mesure avant et après la mise en place du verre de protection 140 est effectuée, et on peut alors caractériser par exemple :
- La transparence, qui peut être calculée en faisant la moyenne de la différence de signal pour chaque surface photosensible entre la mesure avant et après la mise en place du verre de protection 140, divisée ar le signal sans verre de protection 140 ;
- La taille de chaque point opaque (ou graton) présent sur le verre de protection 140, en considérant un point opaque comme étant un point où le signal d'au moins une surface photosensible a baissé de plus de 50% entre la mesure avant et après la mise en place du verre de protection 140 ;
- La taille totale de tous les points opaques (ou gratons) présents sur le verre de protection 140.

Par exemple, si la transparence est inférieure à 95%, et/ou si un point opaque dépasse 1.3 mm², et/ou si la surface totale des points opaques dépasse 2.5 mm², alors, le verre de protection 140 peut être considéré comme étant à changer.

On comprendra que diverses modifications et/ou améliorations évidentes pour l'homme du métier peuvent être apportées aux différents modes de réalisation de l'invention décrits dans la présente description sans sortir du cadre de l'invention. En particulier, il est fait mention d'un laser Nd:YAG, mais il est possible d'utiliser le dispositif et la méthode de contrôle pour un verre de protection d'une soudeuse laser CO₂, c'est-à-dire des sources laser qui émettent dans l'infrarouge, avec leur bande de longueur d'onde principale centrée entre 9,4 et 10,6 µm. Le cadre d'invention est défini dans les revendications.

## Revendications

1. Dispositif de contrôle de verre de protection (140) de soudeuse laser,
le dispositif de contrôle comprenant :
- une source de lumière (10) agencée pour émettre une lumière de test,
- des moyens de réception (20) agencés pour recevoir au moins une partie de la lumière de test et pour quantifier au moins une quantité de lumière reçue,
- des moyens de maintien (30) du verre de protection (140) agencés pour positionner le verre de protection (140) entre la source de lumière (10) et les moyens de réception (20),
- les moyens de maintien (30) sont agencés pour positionner le verre de protection spatialement entre la source de lumière (10) et les moyens de réception (20),
**caractérisé en ce que**
- les moyens de réception sont agencés pour mesurer une surface d'au moins 55 mm2 du verre de protection,
- la partie de la lumière de test reçue par les moyens de réception (20) présente une longueur d'onde comprise entre 855nm et 1276nm, de préférence entre 955 nm et 1170 nm, et encore plus préférentiellement entre 1010 nm et 1110 nm, et très préférentiellement entre 1040 nm et 1080 nm.

2. Dispositif de contrôle selon la revendication précédente, comprenant au moins un filtre optique (15) agencé entre la source de lumière (10) et les moyens de réception (20), et agencé pour laisser passer vers les moyens de réception (20) uniquement la lumière de test dont la longueur d'onde est comprise entre 855nm et 1276nm, de préférence entre 955 nm et 1170 nm, et encore plus préférentiellement entre 1010 nm et 1110 nm, et très préférentiellement entre 1040 nm et 1080 nm.

3. Dispositif de contrôle selon l'une des revendications précédentes, dans lequel la lumière de test émise par la source de lumière (10) présente une longueur d'onde comprise entre 855nm et 1276nm, de préférence entre 955 nm et 1170 nm, et encore plus préférentiellement entre 1010 nm et 1110 nm, et très préférentiellement entre 1040 nm et 1080 nm.

4. Dispositif de contrôle selon l'une des revendications précédentes, dans lequel la lumière de test présente un spectre lumineux dont 80% au moins est compris dans une gamme de valeurs de ±20% de la longueur d'onde laser.

5. Dispositif de contrôle selon l'une des revendications précédentes, dans lequel la source de lumière (10) comprend une diode électroluminescente.

6. Dispositif de contrôle selon l'une des revendications précédentes, dans lequel le verre de protection (140) est séparé de la source de lumière (10) par une distance comprise dans une plage de valeurs allant de 50 mm à 120 mm, et plus préférentiellement de 70 mm à 100 mm.

7. Dispositif de contrôle selon l'une des revendications précédentes, dans lequel les moyens de réception (20) comprennent un capteur avec une surface de mesure, et dans lequel le verre de protection (140) est séparé des moyens de réception (20) par une distance définie de sorte à permettre une mise au point des moyens de réception (20) sur le verre de protection (140), et de sorte à ce qu'une image du verre de protection (140) sur les moyens de réception (20) occupe au moins 80% de la surface de mesure, et préférentiellement au moins 90% de la surface de mesure.

8. Procédé de contrôle d'un verre de protection (140) de soudeuse laser, comprenant les étapes consistant à :
- placer le verre de protection (140) sur un chemin optique et spatialement entre une source de lumière (10), comprenant par exemple un diode électroluminescente, et des moyens de réception (20) de lumière,
- émettre une lumière de test avec la source de lumière (10), la lumière de test présentant une longueur d'onde comprise entre 855nm et 1276nm, de préférence entre 955 nm et 1170 nm, et encore plus préférentiellement entre 1010 nm et 1110 nm, et très préférentiellement entre 1040 nm et 1080 nm,
- mesurer une quantité de la lumière de test reçue par les moyens de réception (20) de lumière ayant traversé une surface d'au moins 55 mm² du verre de protection,
- calculer au moins une caractéristique de transmission du verre de protection (140) à partir de la quantité de lumière de test reçue par les moyens de réception (20),
- comparer la caractéristique de transmission déduite avec un seuil de transmission.

9. Procédé de contrôle selon la revendication précédente, dans lequel ladite au moins une caractéristique de transmission est un taux de transmission, et/ou une transparence, et/ou une surface d'un point opaque du verre de protection (140), et/ou une surface totale de points opaques du verre de protection (140).

10. Procédé de contrôle selon l'une des revendications 8 ou 9, comprenant une étape préliminaire de mesure de référence, consistant à émettre la lumière de test sans le verre de protection (140) sur le chemin optique et à mesurer la quantité de la lumière de test reçue par les moyens de réception (20), de sorte à établir un seuil de référence de quantité de la lumière de test reçue.

11. Procédé de contrôle selon la revendication précédente, dans lequel ladite mesure de référence comprend une étape consistant à maximiser un gain d'un capteur des moyens de réception (20).

12. Procédé de contrôle selon la revendication précédente, le capteur comprenant une pluralité de surfaces photosensibles agencées pour émettre un signal représentatif d'une quantité de lumière reçue, dans lequel ladite l'étape consistant à maximiser le gain comprend une étape consistant à faire varier un temps d'exposition et/ou une intensité d'émission de la source de lumière (10), de sorte à ce que le signal émis par chaque surface photosensible soit au moins 80% d'un signal dit de pleine échelle de chaque surface photosensible, et de préférence 89% du signal de pleine échelle.

13. Procédé de contrôle selon la revendication précédente, dans lequel ledit temps d'exposition et/ou ladite intensité d'émission est maintenu(e) constant(e) pour les mesures ultérieures avec le verre de protection (140) placé sur le chemin optique.

14. Procédé de contrôle selon la revendication 9, dans lequel ladite la transparence est calculée en effectuant une moyenne de la différence du signal émis par chaque surface photosensible entre la mesure de référence et le mesure de test.

15. Procédé de contrôle selon l'une des revendications 8 à 14, comprenant une étape consistant à mettre en fonctionnement la source de lumière (10), et dans lequel aucune mesure n'est effectuée avant un temps prédéterminé, et/ou avant qu'une différence de mesure entre deux mesures effectuées à intervalle de test constant ne soit inférieure à une différence prédéterminée.

## Patentansprüche

1. Schutzglassteuervorrichtung (140) für ein Laserschweißgerät, die Steuervorrichtung umfassend:
- eine Lichtquelle (10), die zum Aussenden eines Prüflichts eingerichtet ist,
- Empfangsmittel (20), die zum Empfangen mindestens eines Teils des Prüflichts und zum Quantifizieren mindestens einer Quantität des empfangenen Lichts eingerichtet sind,
- Mittel (30) zum Halten des Schutzglases (140), die zum Positionieren des Schutzglases (140) zwischen der Lichtquelle (10) und den Empfangsmitteln (20) konfiguriert sind,
- wobei die Haltemittel (30) zum Positionieren des Schutzglases räumlich zwischen der Lichtquelle (10) und den Empfangsmitteln (20) eingerichtet sind,
**dadurch gekennzeichnet, dass**
- die Empfangsmittel zum Messen einer Oberfläche von mindestens 55 mm2 des Schutzglases konfiguriert sind,
- der Teil des Prüflichts, der durch die Empfangsmittel (20) empfangen wird, eine Wellenlänge zwischen 855 nm und 1276 nm, vorzugsweise zwischen 955 nm und 1170 nm, noch mehr bevorzugt zwischen 1010 nm und 1110 nm und ganz bevorzugt zwischen 1040 nm und 1080 nm aufweist.

2. Steuervorrichtung nach dem vorstehenden Anspruch, umfassend mindestens einen optischen Filter (15), der zwischen der Lichtquelle (10) und den Empfangsmitteln (20) eingerichtet ist und zum Durchlassen nur des Prüflichts, dessen Wellenlänge zwischen 855 nm und 1276 nm, vorzugsweise zwischen 955 nm und 1170 nm und noch mehr bevorzugt zwischen 1010 nm und 1110 nm und ganz bevorzugt zwischen 1040 nm und 1080 nm liegt, zu den Empfangsmitteln (20) eingerichtet ist.

3. Prüfvorrichtung nach einem der vorstehenden Ansprüche, wobei das Prüflicht, das durch die Lichtquelle (10) ausgesendet wird, eine Wellenlänge zwischen 855 nm und 1276 nm, vorzugsweise zwischen 955 nm und 1170 nm, noch mehr bevorzugt zwischen 1010 nm und 1110 nm und ganz bevorzugt zwischen 1040 nm und 1080 nm aufweist.

4. Prüfvorrichtung nach einem der vorstehenden Ansprüche, wobei das Prüflicht ein Lichtspektrum aufweist, von dem mindestens 80 % in einer Wertebandbreite von ±20 % der Laserwellenlänge liegen.

5. Steuervorrichtung nach einem der vorstehenden Ansprüche, wobei die Lichtquelle (10) eine Leuchtdiode umfasst.

6. Steuervorrichtung nach einem der vorstehenden Ansprüche, wobei das Schutzglas (140) um einen Abstand in einem Wertebereich von 50 mm bis 120 mm, insbesondere von 70 mm bis 100 mm, von der Lichtquelle (10) getrennt ist.

7. Steuervorrichtung nach einem der vorstehenden Ansprüche, wobei die Empfangsmittel (20) einen Sensor mit einer Messoberfläche umfassen und wobei das Schutzglas (140) um einen Abstand von den Empfangsmitteln (20) getrennt ist, der so definiert ist, dass eine Fokussierung der Empfangsmittel (20) auf das Schutzglas (140) ermöglicht ist, und so, dass ein Bild des Schutzglases (140) auf den Empfangsmitteln (20) mindestens 80 % der Messoberfläche, vorzugsweise mindestens 90 % der Messoberfläche einnimmt.

8. Verfahren zum Steuern eines Schutzglases (140) eines Laserschweißgeräts, umfassend die Schritte, bestehend aus:
- Platzieren des Schutzglases (140) auf einem optischen Weg und räumlich zwischen einer Lichtquelle (10), umfassend beispielsweise eine Leuchtdiode, und Lichtempfangsmitteln (20),
- Aussenden eines Prüflichts mit der Lichtquelle (10), wobei das Prüflicht eine Wellenlänge zwischen 855 nm und 1276 nm, vorzugsweise zwischen 955 nm und 1170 nm, noch mehr bevorzugt zwischen 1010 nm und 1110 nm und ganz bevorzugt zwischen 1040 nm und 1080 nm aufweist,
- Messen einer Quantität des Prüflichts, das durch die Lichtempfangsmittel (20) empfangen wird, das durch eine Oberfläche von mindestens 55 mm² des Schutzglases hindurchgetreten ist,
- Berechnen mindestens einer Transmissionseigenschaft des Schutzglases (140) aus der Quantität von Prüflicht, das durch die Empfangsmittel (20) empfangen wird,
- Vergleichen der abgeleiteten Transmissionseigenschaft mit einem Transmissionsschwellenwert.

9. Steuerverfahren nach dem vorstehenden Anspruch, wobei die mindestens eine Transmissionseigenschaft eine Transmissionsrate und/oder eine Transparenz und/oder eine Oberfläche eines undurchsichtigen Punkts des Schutzglases (140) und/oder eine Gesamtoberfläche undurchsichtiger Punkte des Schutzglases (140) ist.

10. Steuerverfahren nach einem der Ansprüche 8 oder 9, umfassend einen vorläufigen Referenzmessschritt, der darin besteht, das Prüflicht ohne das Schutzglas (140) auf dem optischen Weg auszusenden und die Quantität des Prüflichts zu messen, das durch die Empfangsmittel (20) empfangen wird, um einen Referenzschwellenwert für die Quantität des empfangenen Prüflichts festzulegen.

11. Steuerverfahren nach dem vorstehenden Anspruch, wobei die Referenzmessung einen Schritt umfasst, der daraus besteht, eine Verstärkung eines Sensors der Empfangsmittel (20) zu maximieren.

12. Steuerverfahren nach dem vorstehenden Anspruch, der Sensor umfassend eine Vielzahl lichtempfindlicher Oberflächen, die zum Aussenden eines Signals eingerichtet sind, das eine empfangene Lichtquantität darstellt, wobei der Schritt zum Maximieren der Verstärkung aus einem Schritt zum Variieren einer Belichtungszeit und/oder einer Aussendungsintensität der Lichtquelle (10) umfasst, sodass das Signal, das durch jede lichtempfindliche Oberfläche ausgesendet wird, mindestens 80 % eines Vollausschlagswertsignals jeder lichtempfindlichen Oberfläche und vorzugsweise 89 % des Vollausschlagswertsignals beträgt.

13. Steuerverfahren nach dem vorstehenden Anspruch, wobei die Belichtungszeit und/oder die Aussendungsintensität für nachfolgende Messungen konstant gehalten wird/werden, wobei das Schutzglas (140) auf dem optischen Weg platziert wird.

14. Steuerverfahren nach Anspruch 9, wobei die Transparenz durch Bewirken eines Mittelwerts des Unterschieds des Signals, das durch jede lichtempfindliche Oberfläche ausgesendet wird, zwischen der Referenzmessung und der Testmessung berechnet wird.

15. Prüfverfahren nach einem der Ansprüche 8 bis 14, umfassend einen Schritt, der daraus besteht, die Lichtquelle (10) in Betrieb zu nehmen, und wobei vor einer zuvor bestimmten Zeit und/oder bevor ein Messunterschied zwischen zwei Messungen, die in dem konstanten Testintervall durchgeführt werden, kleiner als ein zuvor bestimmter Unterschied ist, keine Messung durchgeführt wird.

## Claims

1. Device for inspecting laser welding protective glass (140), the inspection device comprising:
- a light source (10) designed to emit a test light,
- receiving means (20) designed to receive at least portion of the test light and to quantify at least one quantity of light received,
- means (30) for holding the protective glass (140), designed to position the protective glass (140) between the light source (10) and the receiving means (20),
- the holding means (30) being designed to position the protective glass spatially between the light source (10) and the receiving means (20),
**characterized in that**
- the receiving means are designed to measure a surface area of at least 55 mm² of the protective glass,
- the portion of the test light received by the receiving means (20) has a wavelength of between 855 nm and 1,276 nm, preferably between 955 nm and 1,170 nm, and even more preferably between 1,010 nm and 1,110 nm, and very preferably between 1,040 nm and 1,080 nm.

2. Inspection device according to the preceding claim, comprising at least one optical filter (15) arranged between the light source (10) and the receiving means (20), and designed to allow only test light with a wavelength of between 855 nm and 1,276 nm, preferably between 955 nm and 1,170 nm, and even more preferably between 1,010 nm and 1,110 nm, and very preferably between 1040 nm and 1,080 nm to pass through to the receiving means (20).

3. Inspection device according to either of the preceding claims, wherein the test light emitted by the light source (10) has a wavelength between 855 nm and 1,276 nm, preferably between 955 nm and 1,170 nm, and even more preferably between 1,010 nm and 1,110 nm, and very preferably between 1,040 nm and 1,080 nm.

4. Inspection device according to any of the preceding claims, wherein the test light has a light spectrum of which at least 80% lies within a range of values of ±20% of the laser wavelength.

5. Inspection device according to any of the preceding claims, wherein the light source (10) comprises a light-emitting diode.

6. Inspection device according to any of the preceding claims, wherein the protective glass (140) is separated from the light source (10) by a distance within a range of values from 50 mm to 120 mm, and more preferably from 70 mm to 100 mm.

7. Inspection device according to any of the preceding claims, wherein the receiving means (20) comprise a sensor with a measuring surface, and wherein the protective glass (140) is separated from the receiving means (20) by a defined distance so as to enable focusing of the receiving means (20) on the protective glass (140), and so that an image of the protective glass (140) on the receiving means (20) occupies at least 80% of the measuring surface, and preferably at least 90% of the measuring surface.

8. Method for inspecting a laser welding protective glass (140), comprising the steps of:
- placing the protective glass (140) in an optical and spatial path between a light source (10), comprising for example a light-emitting diode, and light-receiving means (20),
- emitting a test light with the light source (10), the test light having a wavelength between 855 nm and 1,276 nm, preferably between 955 nm and 1,170 nm, and even more preferably between 1,010 nm and 1,110 nm, and very preferably between 1,040 nm and 1,080 nm,
- measuring a quantity of the test light received by the light-receiving means (20) having passed through a surface area of at least 55 mm² of the protective glass,
- calculating at least one transmission characteristic of the protective glass (140) from the quantity of test light received by the receiving means (20),
- comparing the deduced transmission characteristic with a transmission threshold.

9. Inspection method according to the preceding claim, wherein said at least one transmission characteristic is a transmission rate, and/or a transparency, and/or a surface area of an opaque point of the protective glass (140), and/or a total surface area of opaque points of the protective glass (140).

10. Inspection method according to either claim 8 or claim 9, comprising a preliminary reference measurement step, consisting of emitting the test light without the protective glass (140) on the optical path and measuring the quantity of the test light received by the receiving means (20), so as to establish a reference threshold of the quantity of the test light received.

11. Inspection method according to the preceding claim, wherein said reference measurement comprises a step of maximizing a gain of a sensor of the receiving means (20).

12. Inspection method according to the preceding claim, the sensor comprising a plurality of photosensitive surfaces designed to emit a signal representative of a quantity of light received, wherein said step of maximizing the gain comprises a step of varying an exposure time and/or an emission intensity of the light source (10), so that the signal emitted by each photosensitive surface is at least 80% of a so-called full-scale signal of each photosensitive surface, and preferably 89% of the full-scale signal.

13. Inspection method according to the preceding claim, wherein said exposure time and/or said emission intensity is kept constant for subsequent measurements with the protective glass (140) placed in the optical path.

14. Inspection method according to claim 9, wherein said transparency is calculated by averaging the difference in the signal emitted by each photosensitive surface between the reference measurement and the test measurement.

15. Inspection method according to any of claims 8 to 14, comprising a step of switching on the light source (10), and wherein no measurement is performed before a predetermined time, and/or before a measurement difference between two measurements performed at a constant test interval is less than a predetermined difference.
